# EUROPEAN PATENT APPLICATION

(11) **EP 1 962 240 A1**
(43) Date of publication of application: **27.08.2008**
(21) Application number: 06817922.5
(22) Date of filing: 29.11.2006
(51) Int. Cl.: G06Q 30/00

(54) **METHOD AND SYSTEM FOR MANAGING TRANSACTION OF VIRTUAL IMAGE**

(30) Priority: 13.12.2005 CN 200510111461
(71) Applicant: Huawei Technologies Co., Ltd., Longgang District Shenzhen 518129 (CN)
(72) Inventor: JIAO, Jingmin, Guangdong 518129 (CN); LIU, Qian, Shenzhen, Guangdong 518129 (CN)
(74) Representative: Hengelhaupt, Jürgen
(86) International application number: PCT/CN2006/003212
(87) International publication number: WO 2007/068183

(57) **Abstract**

A method and system for managing a transaction of the virtual images. It comprises generating a requirement for a virtual image of a user according to the user's request and a demand data of amount of payment promised by the user for the virtual image. And the demand data is provided to a third party by a design and manage unit of a middle image when the third party is querying. A certain number of fortunes equal to the amount of payment are transferred to the third party from the user's account when the virtual image designed according to the demand data provided by the third party is accepted by the user.

## Description

This application claims a priority from the Chinese Patent Application No. 200510111461.7, filed with the Chinese Patent Office on December 13, 2005, entitled "SYSTEM AND METHOD FOR MANAGING TRANSACTION OF VIRTUAL IMAGE", contents of which are incorporated herein by reference in its entirety.

### Field of the Invention

The present invention relates to the field of network communication technologies, particularly to the information interoperability of the network technologies, and more particularly to a method and system for managing a transaction of virtual images.

### Background of the Invention

With the development and popularity of the Internet, more and more people access the Internet. Statistics shows that now more than 100 million people in China access the Internet. The type and content of the virtual world is becoming more and more colorful with the popularity of network games, the spread of community forums, and the emergence of virtual hosts.

In the past, a user is present in the network anonymously, or only with a literal identification (ID) to be differentiated from others. With a virtual image (avatar), the user can represent his/her image with a picture or animation to satisfy the requirement of self-expression and personality of his/her own, and the image in the virtual world can also be updated by the user as desired. The virtual image enhances the character of interpersonal relationship and reality sense in the network, which meets the demand that the user wish to express himself/herself in a more intuitive manner in the virtual world. Numerous users are attracted because of the simplicity, understandability, and diversity of the virtual image and the competitiveness of the network is enhanced. Therefore, the virtual image is accepted rapidly by the providers and users. Furthermore, in commercial activities, the virtual image is recommended to be the product prolocutor to substitute a specialist or star by lots of enterprises because of the high expense of the latter, and it is in practice used broadly.

In view of the above characteristics, in recent years, each large network application provider provides respective virtual image system to promote value-added service of the Internet. The user can change his/her virtual image at will with little expense. At the same time, some network application providers make more profit by means of the virtual image, which has already become the main driving power for development of those providers.

Currently, the user usually directly uses the existing virtual image. Although some network application providers provide their own virtual image system, in fact those virtual images are repeated seriously, thereby impeding the development of the virtual image. Although some users can manually make their own virtual images, most users have no interest in designing and making virtual images. In this case, if a virtual image can be provided completely dependent upon the user's individual inclination, it will be most convenient for those users who need but do not want to make the virtual image by themselves, and attract more users to join in.

Up to now, there is no platform or technique to provide individualized virtual images wholly based on the user's will.

### Summary of the Invention

Embodiments of the present invention provide a method and system for managing a transaction of virtual images, so that the user can attain his/her individualized virtual image as desired.

A method for managing a transaction of virtual images includes :

generating demand data including a user's requirement for a virtual image and the amount of payment promised by the user for the virtual image, according to a user's request;

providing the demand data to a third party when the third party is querying; and

transferring a number of fortunes equal to the amount of payment to the third party from the user's account when the virtual image designed according to the demand data and provided by the third party is accepted by the user.

Preferably, the method further includes:

before generating the demand data, checking whether the fortunes in the user's account is more than or equal to the amount of payment, if the fortunes in the user's account is more than or equal to the amount of payment, freezing a number of fortunes in the user's account equal to the amount of payment; and if the fortunes in the user's account is less than the amount of payment, refusing to generate the demand data.

Preferably, the period of validity of the demand data is set according to the user's request, and the demand data is deleted when expired.

A system for managing a transaction of virtual images is provided in a further embodiment of the present invention, including:

a middle image design and management unit, configured to generate demand data, including a user's requirement for a virtual image and the amount of payment promised by the user for the virtual image, for the query of a third party according to a user's request; and to transfer a part of fortunes in the user's account to the third party's account when the virtual image designed by the third party is accepted by the user; and

a database, configured to store and provide the demand data to the middle image design and manage unit for querying.

Preferably, the system for managing a transaction of virtual images further includes:

an authentication unit, configured to query and utilize the virtual image of the user used in the present scenario based on the authentication information of the user.

With the solution for managing a transaction of virtual images according to embodiments of the present invention, firstly, designing a virtual image wholly based on the user's own inclination can be achieved, which will largely meet the individualized requirement of the user for the virtual image; secondly, in the present invention, the setting of the amount of payment for the virtual image by the user can encourage the designing of the virtual image by the third party, and thus ensure the design can meet the requirement of the user for the virtual image; thirdly, it facilitates to keep the user's enthusiasm to log in the platform when using the network application platform according to embodiments of the present invention, which in one aspect largely increases the popularity of this network application platform, and in another aspect additionally improves the user's loyalty.

### Brief Description of the Drawings

Figure 1 is a structural diagram of a system for managing a transaction of virtual images according to a first embodiment of the present invention;

Figure 2 is a flowchart of a method for managing a transaction of virtual images according to a first embodiment of the present invention;

Figure 3 is the particular flow of Block 310 according to a second embodiment of the present invention; and

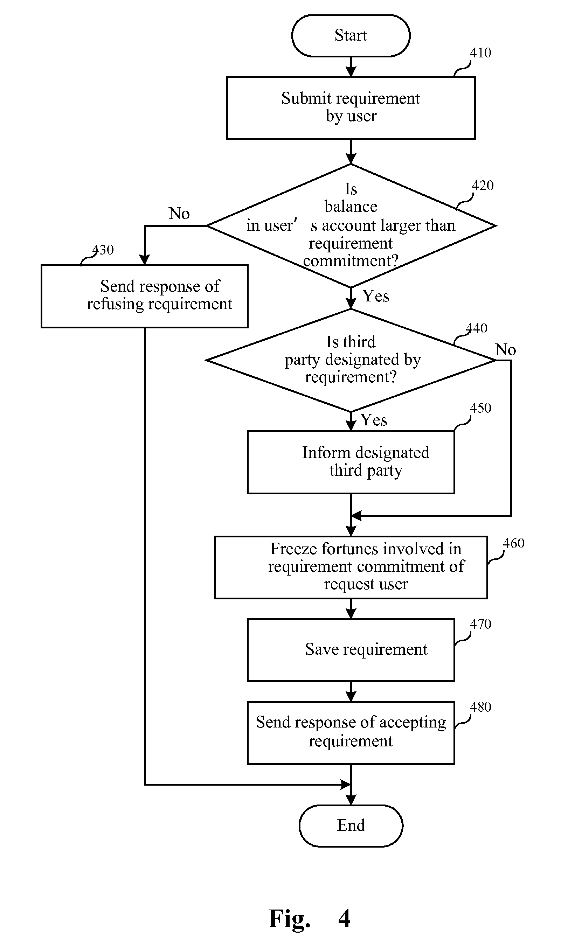

Figure 4 is a structural diagram of a system for managing a transaction of virtual images according to a fourth embodiment of the present invention.

### Detailed Description of the Invention

Embodiments of the present invention are described in detail as follows with reference to the accompanied drawings for the purpose of making the objects, technical solutions and advantages of the present invention more apparent.

The object of a system for managing a transaction of virtual images according to embodiments of the present invention is to encourage a third party to design virtual images according to a user's request, therefore to meet the requirement of the user. The user is connected to the system for managing a transaction of virtual images which includes a middle image design and management unit and a database.

The middle image design and management unit generates demand data according to the user's request, including the user's requirement for the virtual image and the amount of payment promised by the user for the virtual image, for the query of a third party; and transfers part of fortunes in the user's account to the third party's account when the virtual image designed by the third party is accepted by the user.

The database is configured to store the demand data generated and queried by the middle image design and management unit.

The third party described above refers to other users which connect to the system for managing a transaction of virtual images, and design the virtual images.

Furthermore, when requested to generate the demand data, the middle image design and management unit is also configured to check whether the fortunes in the user's account is more than or equal to the amount of payment; if the fortunes in the user's account is more than or equal to the amount of payment, the middle image design and management unit freezes a certain number of fortunes in the user's account equal to the amount of payment, so as to transfer this part of fortunes to the third party's account when the virtual image designed by the third party is accepted by the user; otherwise, the middle image design and management unit refuses to generate the demand data.

The demand data generated by the middle image design and management unit described above includes a requirement identification for uniquely identifying an item of the demand data, a requester identification for identifying a user, a requirement description of the request from a user for virtual image, a requirement commitment which is the amount of fortunes promised by the user paid for the virtual image satisfying the requirement description, and the virtual image designed by the third party according to the requirement description.

Furthermore, the middle image design and management unit is also configured to set the period of validity of the demand data based on the user's request and delete the item of demand data when the period of validity expires and no designed virtual image is submitted by the third party.

In addition, the middle image design and management unit is further configured to feedback information to the user and the third party according to conditions of implementing and change of the user's demand.

Furthermore, the middle image design and management unit is also configured to manage the virtual image of the user and sort the virtual image of the user according to the user's request. The system for managing a transaction of virtual images also includes an authentication unit configured to query and utilize the user's virtual image in the present scenario in the system for managing a transaction of virtual images according to the authentication information of the user.

A method for managing a transaction of virtual images is provided in a further embodiment of the present invention, including:

A. generating, by a middle image design and management unit, demand data including a user's requirement for a virtual image and the amount of payment promised by the user for the virtual image, according to the user's request;

B. providing, by the middle image design and management unit, the demand data to a third party when the third party is querying; and

C. transferring, by the middle image design and management unit, a certain number of fortunes equal to the amount of payment to the third party from the user's account when the virtual image designed and provided according to the demand data by the third party is accepted by the user.

At Block A, the demand data generated by the middle image design and management unit includes a requirement identification for uniquely identifying an item of the demand data, a requester identification for identifying a user, a requirement description of the request from a user for virtual image, a requirement commitment which is the amount of fortunes promised by the user paid for the virtual image satisfying the requirement description, and the virtual image designed by the third party according to the requirement description.

At Block A, when requested to generate the demand data, the middle image design and management unit also check whether the fortunes in the user's account is more than or equal to the amount of payment, if the fortunes in the user's account is more than or equal to the amount of payment, the middle image design and management unit freezes a certain number of fortunes in the user's account equal to the amount of payment; otherwise, refuses to generate the demand data.

Furthermore, the method for managing a transaction of virtual images further includes one or any combination of the following:

D. configuring, by the middle image design and management unit, the period of validity of the demand data based on the user's request, and deleting this item of demand data when the period of validity expires;

E. managing, by the middle image design and management unit, the virtual image of the user, sorting and using the virtual image of the user according to the user's request; and

F. feeding back, by the middle image design and management unit, information to the user and the third party according to conditions of implementing and changing of the user's demand.

It can be seen that, with the solution for managing a transaction of virtual images according to embodiments of the present invention, firstly, designing a virtual image wholly based on the user's own inclination can be achieved, which will largely meet the individualized requirement of the user for the virtual image; secondly, in the present invention, the setting of the amount of payment for the virtual image by the user can encourage the designing of the virtual image by the third party, and thus ensure that the design can meet the requirement of the user for the virtual image; thirdly, it facilitates to keep the user's enthusiasm to log in the platform when using the network application platform according to embodiments of the present invention, which in one aspect largely increases the popularity of this network application platform, and in another aspect additionally improves the user's loyalty.

Description is made in combination with preferred embodiments of the present invention and the accompanied drawings for the purpose of better describing the solution of the present invention.

### Embodiment 1

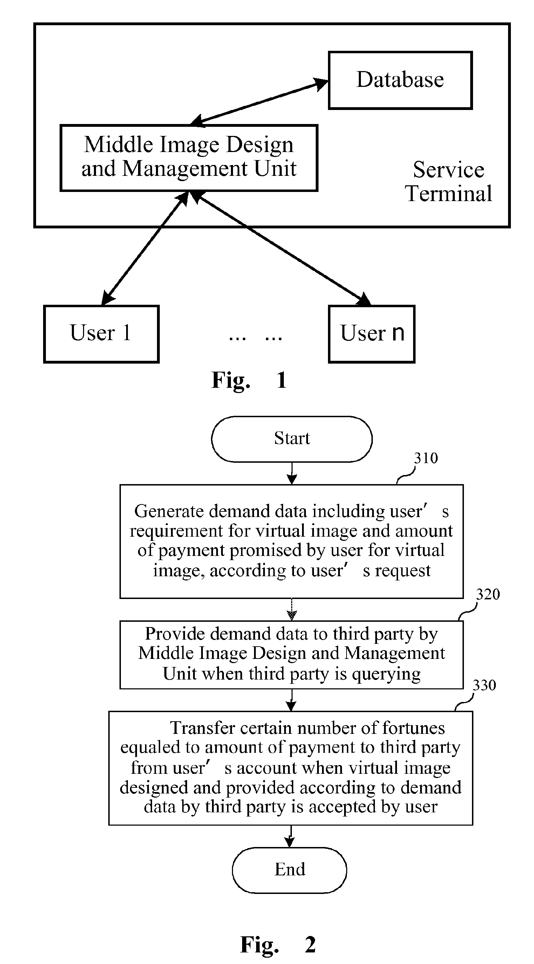

Figure 1 shows components of a system for managing a transaction of virtual images according to a first embodiment of the present invention.

The system for managing a transaction of virtual images includes a middle image design and management unit and a database. The users are connected with the middle image design and management unit.

The middle image design and management unit, according to the user's request, generates demand data, including a user's requirement for a virtual image and the amount of payment promised by the user for the virtual image, for the query of a third party, and transfers the amount of payment promised by the user to the third party's account when the virtual image designed by the third party is accepted by the user. Here, the third party is other user that is connected to the system for managing a transaction of virtual images and designs the virtual images. In the first preferred embodiment of the present invention, the demand data includes a requirement identification for uniquely identifying an item of the demand data, a requester identification for identifying a user, a requirement description for storing the request of a user for virtual image, a requirement commitment for storing the amount of fortunes promised by the user paid for the virtual image satisfying the requirement description, and a resultant content for storing the virtual image designed by the third party according to the requirement description.

In the present embodiment, the user can also demand the middle image design and management unit to set the period of validity of the demand data in sending request. For example, the user can set the period of validity of the demand for the virtual image as within one month. If no virtual image designed according to the demand data is submitted by the third party when the period of validity expires, the middle image design and management unit will delete this item of demand data. In the first preferred embodiment of the present invention, the third party can query the middle image design and management unit for the demand data currently valid, and select the demand data interested in to design the virtual image. Because of the stimulation of the payment, the third party will have more enthusiasm to design the virtual image, which is more convenient for the user in demand for virtual image. Here, the fortune in the account may be a virtual fortune. For example, in the present embodiment, the fortune is the game coin used in the game system. Further, the user can also designate a third party, and the middle image design and management unit informs the third party according to the user's designation.

The database is configured to store the demand data generated and queried by the middle image design and management unit. Here, the implementation of the database is completely the same as that in the prior art, which provides a known operable database interface for storing and querying data, the detail of which is omitted here. For example, in the first preferred embodiment of the present invention, the table of the demand data stored in the database is shown as Table 1 below.

**Table 1**

| Requirement identification | Requester identification | Responder identification | Requirement description | Requirement commitment | Resultant content |
|---|---|---|---|---|---|
| 1 | San Li | Wu Wang | A dull with big eyes... | 5 game coins | ... |
| 2 | Si Zhao | Er Qian | A fortune pig... | 20 game coins | ... |

As shown in Figure 2, the procedure for a method for managing a transaction of virtual images according to the first embodiment of the present invention is as follows.

Block 310: The middle image design and management unit generates demand data including a user's requirement for a virtual image and the amount of payment promised by the user for the virtual image, according to the user's request. Here, the payment may be a virtual fortune. For example, in the first preferred embodiment of the present invention, the payment is the game coin used in the game system. In the first preferred embodiment of the present invention, the demand data is stored in the table of demand data which includes the items of a requirement identification for uniquely identifying an item of the demand data, a requester identification for identifying a user, a requirement description for storing the request of a user for virtual image, a requirement commitment for storing the amount of fortunes promised by the user paid for the virtual image satisfying the requirement description, and a resultant content for storing the virtual image designed by the third party according to the requirement description.

Block 320: The middle image design and management unit provides the demand data to a third party when queried by the third party.

Block 330: The middle image design and management unit transfers a certain number of fortunes equal to the amount of payment to the third party from the user's account when the virtual image designed and provided according to the demand data by the third party is accepted by the user.

### Embodiment 2

According to the first embodiment of the present invention, when requested to generate the demand data, the middle image design and management unit also checks whether the fortunes in the user's account is more than or equal to the amount of payment, if the fortunes in the user's account is more than or equal to the amount of payment, the middle image design and management unit freezes a certain number of fortunes in the user's account equal to the amount of payment, and transfers the part of fortunes to the third party's account when the virtual image designed by the third party is accepted by the user; otherwise, refuses to generate the demand data. It is understood by the ordinary skilled in the art that, this can effectively prevent the cheating behavior and better promote the enthusiasm of the third party to design virtual images, thus ensure that the user's demand can be best satisfied. It is noted additionally that, in a second embodiment of the present invention, when the demand data is deleted when the period of validity expires, the middle image design and management unit also needs to unfreeze the corresponding fortunes in the user's account.

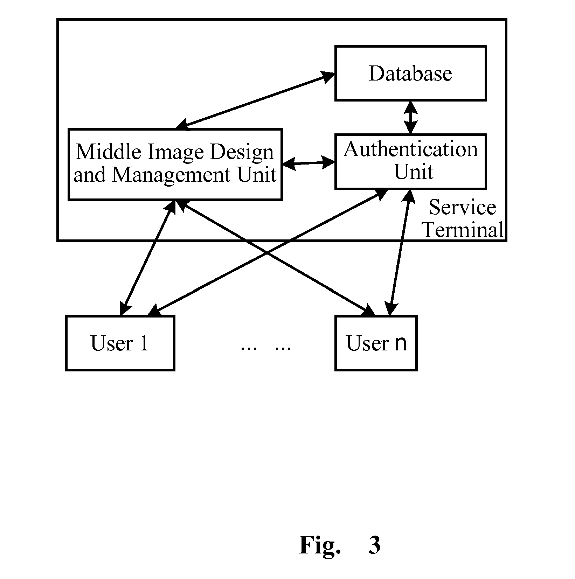

At Block 310 of the first embodiment, the middle image design and management unit further checks whether the fortunes in the user's account is more than or equal to the amount of payment, if the fortunes in the user's account is more than or equal to the amount of payment, the middle image design and management unit further freezes a certain number of fortunes in the user's account equal to the amount of payment; otherwise, refuses to generate the demand data. It is understood by those of ordinary skills in the art that, this can effectively prevent cheating and better promote the enthusiasm of the third party to design virtual images, thus ensure that the user's demand can be best satisfied. Furthermore, in the second embodiment of the present invention, a third party can be designated by the user's request, and the middle image design and management unit informs the third party according to the designation, the particular flow of which is as shown in Figure 3. It is very easy for those skilled in the art to understand, and therefore the detail is omitted here.

### Embodiment 3

On the basis of the first embodiment of the present invention, the middle image design and management unit is further configured to feedback information to the user and the third party according to conditions of implementing the user's demand and changing of the user's demand. Here, the scenario in which information needs to be fed back to the user and the third party includes deleting the demand data when the period of validity expires, and accepting, by the user, the virtual image designed by the third party.

The flow of the method for managing a transaction of virtual images on the basis of the first embodiment of the present invention further includes that the middle image design and management unit sets the period of validity of the demand data according to the user's request, and deletes this item of demand data when the period of validity expires. The user can be provided with more flexibility and convenience by means of above.

### Embodiment 4

On the basis of the first embodiment of the present invention, the middle image design and management unit is also configured to manage the virtual image of the user, and to sort the virtual image according to the user's request. Here, the sorting mode includes using a different virtual image in a different scenario, or displaying a different virtual image to different user. In a fourth preferable embodiment of the present invention, to support using a different virtual image in a different scenario, the middle image design and management unit further includes an authentication unit for querying and utilizing the virtual image of the user in the present scenario stored in the system for managing a transaction of virtual images based on the authentication information of the user. Here, as shown in Figure 3, the system for managing a transaction of virtual images according to the present invention includes a middle image design and management unit, a database and an authentication unit, and the authentication unit is configured to query and utilize the virtual image of the user in the present scenario according to the authentication information of the user.

The middle image design and management unit manages the virtual image of the user, sorts and uses the virtual image of the user according to the user's request. Here, the sorting mode of the virtual image includes using different virtual images in different scenarios, or displaying different virtual images to different users.

Furthermore, the middle image design and management unit is further configured to feedback information to the user and the third party according to conditions of implementing the user's demand and changing of the user's demand. Here, the scenario in which information needs to be fed back to the user and the third party includes deleting the demand data when the period of validity expires and accepting, by the user, the virtual image designed by the third party.

Although the present invention has been illustrated and described with reference to some preferred embodiments of the present invention, it is understood by those of ordinary skills in the art that various changes in the form and in the detail of the present invention can be made without departing from the spirit and scope of the present invention.

## Claims

1. A method for managing a transaction of virtual images, comprising:
generating demand data including a user's requirement for a virtual image and the amount of payment promised by the user for the virtual image, according to a user's request;
providing the demand data to a third party when the third party is querying; and
transferring a number of fortunes equal to the amount of payment to the third party from the user's account when the virtual image designed according to the demand data and provided by the third party is accepted by the user.

2. The method for managing the transaction of the virtual images according to claim 1, further comprising:
before generating the demand data, checking whether the fortunes in the user's account is more than or equal to the amount of payment; if the fortunes in the user's account is more than or equal to the amount of payment, freezing a number of fortunes in the user's account equal to the amount of payment; and if the fortunes in the user's account is less than the amount of payment, refusing to generate the demand data.

3. The method for managing the transaction of the virtual images according to claim 1, further comprising:
setting the period of validity of the demand data according to the user's request, and deleting the demand data when the period of validity expires.

4. The method for managing the transaction of the virtual images according to claim 1, further comprising:
sorting and utilizing the virtual images of the user according to the user's requirement.

5. The method for managing the transaction of the virtual images according to claim 1, further comprising:
feeding back information to the user and the third party according to conditions of implementing the demand data and changing of the demand data.

6. The method for managing the transaction of the virtual images according to any of claims 1-5, wherein the demand data comprises:
a requirement identification for uniquely identifying an item of the demand data;
a requester identification for identifying the user;
a requirement description for storing the requirement of the user for virtual image;
a requirement commitment for storing the amount of fortunes promised by the user paid for the virtual image satisfying the requirement description; and
a resultant content for storing the virtual image designed by the third party according to the requirement description.

7. A system for managing a transaction of virtual images, comprising:
a middle image design and management unit, configured to generate demand data, including a user's requirement for a virtual image and the amount of payment promised by the user for the virtual image, for the query of a third party according to a user's request; and to transfer a part of fortunes in the user's account to the third party's account when the virtual image designed by the third party is accepted by the user; and
a database, configured to store and provide the demand data to the middle image design and manage unit for querying.

8. The system for managing the transaction of the virtual images according to claim 7, wherein the middle image design and management unit is configured to check whether the fortunes in the user's account is more than or equal to the amount of payment before the demand data is generated, and to freeze a number of fortunes in the user's account equal to the amount of payment if the fortunes in the user's account is more than or equal to the amount of payment ; and if the fortunes in the user's account is less than the amount of payment, to refuse to generate the demand data.

9. The system for managing the transaction of the virtual images according to claim 7, wherein the middle image design and management unit is also configured to manage the virtual image of the user, and to sort the virtual image of the user.

10. The system for managing the transaction of the virtual images according to claim 9, further comprising an authentication unit configured to query and utilize the virtual image of the user used in the present scenario based on the authentication information of the user.

11. The system for managing the transaction of the virtual images according to claim 7, wherein the middle image design and management unit is further configured to feedback information to the user and the third party according to conditions of implementing the demand data and changing of the demand data.

12. The system for managing the transaction of the virtual images according to claim 7, wherein the middle image design and management unit is configured to delete the demand data when the period of validity of the demand data expires.
